(19) Europäisches Patentamt / European Patent Office / Office européen des brevets

(11) **EP 4 073 181 B1**

(12) **EUROPEAN PATENT SPECIFICATION**

(45) Date of publication and mention
of the grant of the patent:
**01.11.2023 Bulletin 2023/44**

(21) Application number: **20830093.9**

(22) Date of filing: **09.12.2020**

(51) International Patent Classification (IPC):
*C09D 5/08* (2006.01)    *C09D 7/65* (2018.01)
*C23C 22/62* (2006.01)    *C23C 22/66* (2006.01)
*C23C 22/68* (2006.01)    *C23C 22/73* (2006.01)

(52) Cooperative Patent Classification (CPC):
**C09D 5/08; C09D 5/084; C09D 7/65; C23C 22/62;
C23C 22/66; C23C 22/68; C23C 22/73; B05D 1/18;
B05D 1/36; B05D 3/0254; B05D 2202/10;
C08L 89/00; C23C 22/76**

(86) International application number:
**PCT/EP2020/085343**

(87) International publication number:
**WO 2021/116205 (17.06.2021 Gazette 2021/24)**

(54) **COATING FOR CORROSION PROTECTION**

BESCHICHTUNG FÜR KORROSIONSSCHUTZ

REVÊTEMENT POUR PROTECTION CONTRE LA CORROSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2019 SE 1951419**

(43) Date of publication of application:
**19.10.2022 Bulletin 2022/42**

(73) Proprietor: **BioPolymer Products of Sweden AB
442 75 Lycke (SE)**

(72) Inventor: **QVIST, Magnus
441 43 Alingsås (SE)**

(74) Representative: **Ström & Gulliksson AB
Box 5275
102 46 Stockholm (SE)**

(56) References cited:
**WO-A1-2010/091300    WO-A1-2012/007199
WO-A1-2018/132967    WO-A2-2006/055531
CN-B- 105 088 201**

- **JI HYUN RYU ET AL: "Polydopamine Surface
Chemistry: A Decade of Discovery", ACS
APPLIED MATERIALS & INTERFACES, vol. 10,
no. 9, 21 February 2018 (2018-02-21), pages
7523-7540, XP055506796, US ISSN: 1944-8244,
DOI: 10.1021/acsami.7b19865**

**Description**

Field of the invention

The present invention relates to a coating for corrosion protection of metal objects as well as a method for applying the coating.

Background

Corrosion is a metallic material degradation process occurring naturally, which can cause catastrophic accidents and huge economic losses. It can be controlled by suitable anti-corrosion strategies, and application of coatings is one of the most effective approaches. However, traditional ones often involve chromate or organic phosphoric acid baths, which can cause environmental pollution and health risk. It is necessary to develop alternative environmental friendly pretreatment techniques.

It is known that cerium oxide treatment of a metal improves the corrosion resistance due to the formation of a protective oxide film, which acts as an active protective layer on the metal surface.

Adhikari et al in Electrochimica Acta, Vol 53, issue 12, pp 4239-4247 studies anticorrosion properties of a coating comprising modified polyaniline dispersed in polyvinylacetate on carbon steel.

Zhitomirsky in Surface Engineering, Vol 20, issue 1, pp. 43-47 discloses electrode position of films comprising ceria and the cationic polymer polyethylenimine.

Corrosion inhibiting coatings according to the state of the art often use compounds, which are known to cause Environmental problems and/or health problems for users. Examples include chromium compounds.

Y. Gao et al in Transactions of the Institute of Metal Finishing vol. 84, no 3, 2006, pp 141-148 discloses corrosion protection of zinc-electroplated steel. The corrosion inhibiting coating is a coating comprising either gelatin or albumin as well as dichromate. In addition, an alternative coating comprising gelatin and cerium trichloride is disclosed. It is concluded that the ability of cerium trichloride to stabilize protein formulations against putrefaction is questionable and that its adoption would require an associated stabilizer.

N. Chandrasekaran in UC Research Repository, 2014, "The influence of amino acid properties on the adsorption of proteins and peptides to stainless steel surfaces" pp 115-116, discloses a role of DOPA residues in mediating protein adhesion on stainless steel surfaces.

W. Wei et al in Langmuir vol. 31, no 3, 2015, pp 1105-1112, discloses the significance of increasing peptide length for promoting adhesion between two surfaces when the adhesion of peptides to each of the surfaces is dominated by DOPA-mediated interactions. Short peptides are compared to full length proteins Mfp-5. When the interactions are DOPA-mediated, the short peptides are only capable of weak bridging adhesion between two mica surfaces, but the full length Mfp-5 gives an adhesion about one order of magnitude stronger for similar DOPA density. This result gives that shorter peptides are not so efficient for adhesive purposes and a skilled person may believe that this result can also be applied for corrosion inhibition. At least the shorter peptides would be less attractive for corrosion protection because of a weaker adhesion. D. C. Hansen et al in Electrochimica Acta, vol. 301, 2019, pp 411-420, suggests that there may be a synergistic role between lysine and L-DOPA in the adhesion/adsorption of protein on metal surface, resulting in improved corrosion inhibition and that that cross-linking of the protein MeFP-5 does increase corrosion inhibition.

B. Kollbe Ahn et al in Nature Communications 6, article number: 8663, 2015, discloses a synthetic low-molecular-weight catecholic zwitterionic surfactant that mimics the strong adhesive priming and self-coacervating properties of mussel foot proteins.

A. Butler in Science vol. 349, issue 6248, 2015, pp 628-632, discloses that the adjacent catechol-lysine placement in mussel foot proteins provides a synergistic interplay in adhesion, whereby lysine evicts hydrated cations from the mineral surface, allowing catechol binding to underlying oxides.

S. Das et al in Advanced Functional Materials vol. 25, issue 36 2015, pp 5840-5847, discloses an assessment of a partial recombinant construct of mussel foot protein-1 and short decapeptide dimers with and without Dopa and both their cohesive and adhesive properties on mica, showing that DOPA in a peptide sequence does not by itself mediate $Fe^{3+}$ bridging interactions between peptide films: peptide length is a crucial enabling factor. This result would also hint at the importance of long peptide length.

US 2004/0028820 discloses coating of aluminum using cerium ions in the presence of an oxidizing agent. The preferred cerium-based coatings comprise cerium oxide, hydrated cerium oxide, or forms of cerium hydroxide after coating. The coating bath optionally contains animal gelatin, glycerol, or other organic additive to improve coating uniformity and corrosion resistance. It is speculated that the gelatin functions to modify the nucleation and growth sites.

Lee et al in Science, vol. 318, 2007, pp 426-430 discloses dopamine self-polymerization to form thin, surfaceadherent polydopamine films onto a wide range of inorganic and organic materials, including noble metals, oxides, polymers, semiconductors, and ceramics.

WO 03/008376 discloses conjugation of DOPA moieties to various polymeric systems.

CN 101658837 discloses preparation of an anticorrosive film for metal surfaces. The film comprises dopamine.

WO 2012/007199 discloses a corrosion inhibiting coating comprising at least one cerium oxide and at least one polymer. The polymer comprises at least one cathecholic component covalently bound thereto, and the at least one polymer displays a net positive charge at a pH of 7. The polymer can be for instance a mussel adhesive protein. There is disclosed a polypeptide comprising 30 - 3000 amino acid residues. In the experimental part a peptide length of about 800-1000 aa is disclosed.

WO 2018/132967 discloses a corrosion inhibiting coating comprising at least one cerium oxide and at least one polymer, wherein the at least one polymer comprises at least one mussel adhesive protein, wherein the coating has been subjected to heating to at least 60 °C during at least 10 minutes.

Although the corrosion protection in the prior art is working fine, there is still room for a further improved corrosion protection.

One problem to be solved is the time it takes for a good corrosion resistance to be achieved after coating an object. It is desired that the corrosion protective coating should be effective as soon as possible after application. If coated products have to be stored in a protected environment for the coating to mature some time before the coating becomes effective, the product becomes more costly. A corrosion protective coating which is effective shortly after the application is desired, at least for certain applications where a quick corrosion protection is necessary. One example is metal surfaces where the surface will be exposed to a corrosive environment shortly after the coating. A problem in the prior art is that the coating takes time to reach its full effect.

Summary

One object of the present invention is to obviate at least some of the disadvantages in the prior art and provide a new coating and a method for corrosion protection.

In a first aspect there is provided a coating for corrosion protection of metal objects, said coating comprising at least one cerium oxide and at least one polypeptide, wherein the polypeptide comprises 29 or less amino acid residues of which more than 15% are DOPA.

In a second aspect there is provided a method for corrosion protection of metal objects, said method comprising applying a coating as described above.

Further embodiments of the present invention are defined in the appended dependent claims.

An advantage of the use of shorter polypeptides than described in the prior art is that corrosion resistance is achieved faster, as shown in the appended Examples. The corrosion protective properties of the coating are obtained quicker compared to longer polypeptides. This is unexpected, in particular in view of W. Wei et al and S. Das et al indicating that the peptide length is a factor for strong adhesion, which could be assumed to translate into improved corrosion adhesion.

From the appended examples it can be concluded that the shorter the peptide is, the better the short term corrosion protection is. 1h after application, the AT-M5D-8 (10aa) provides the highest increase in the Rp values, as compared to the control sample, followed by the AT-M5D-4 (19aa), the full length AT-M5D (37aa) and the Mefp-1/ceria, in that order. Thus it can be understood that the shorter the peptide is, the better the short term corrosion protection. The short term corrosion protection is important in certain applications, for instance where a manufactured product is to be transported without cover directly after application of the corrosion protective coating. With the coating according to the present invention the protective effect occurs without waiting for many hours or even days as for similar coatings according to the prior art.

A bonus effect is that manufacturing of shorter peptides is generally easier and cheaper, the shorter polypeptides are more stable which results in easier handling of solutions of the polypeptide and a higher possible concentration of polypeptides in the solutions. The finished coating generally becomes more even and dense when using shorter polypeptides.

Further advantages of the invention include that the material is environmental friendly and does not display the serious health risks as many of the compounds used in the state of the art.

Detailed description

Before the invention is disclosed and described in detail, it is to be understood that this invention is not limited to particular configurations, process steps and materials disclosed herein as such configurations, process steps and materials may vary somewhat. It is also to be understood that the terminology employed herein is used for the purpose of describing particular embodiments only and is not intended to be limiting since the scope of the present invention is limited only by the appended claims.

It must be noted that, as used in this specification and the appended claims, the singular forms "a", "an" and "the" include plural referents unless the context clearly dictates otherwise.

If nothing else is defined, any terms and scientific terminology used herein are intended to have the meanings commonly understood by those of skill in the art to which this invention pertains.

The term "about" as used in connection with a numerical value throughout the description and the claims denotes an interval of accuracy, familiar and acceptable to a person skilled in the art. Said interval is $\pm$ 10 %.

As used throughout the claims and the description, the term "metal object" denotes an object comprising at least partially a metal surface. An object made of a metal and a non-metal where a part of the surface is a metal surface is thus encompassed within the term metal object. Further objects at least partially made of different metals as well as metal alloys are encompassed within the term.

As used throughout the claims and the description, the term "coating" denotes a layer of material that is applied at least partially to the surface of an object.

As used throughout the claims and the description, the term "polypeptide" denotes polymerized amino acids. A polypeptide can comprise any number of amino acid residues. Proteins are encompassed within the term polypeptide. Polypeptides comprising 50 or more amino acid residues are also denoted proteins. The polypeptide can be extracted from a natural source or it can be synthetically manufactured. Both natural and synthetic polypeptides are thus encompassed by the term.

As used throughout the claims and the description, the term "DOPA" denotes the chemical compound dihydroxyphenylalanine and may refer to either of D-3,4-dihydroxyphenylalanine L-3,4-dihydroxyphenylalanine. Both D-DOPA and L-DOPA are encompassed by the term DOPA. When a peptide or protein is said to comprise DOPA then it is understood that the DOPA molecule is bound to other amino acid(s). When DOPA is used in the term "a molecule comprising DOPA", then it is understood that DOPA is reacted with another entity to create such a molecule comprising DOPA. A molecule comprising DOPA is thus the result of a reaction of DOPA with another molecule.

As used throughout the claims and the description, the term "cerium oxide" denotes a chemical compound or complex comprising the chemical element cerium (Ce) and the chemical element oxygen (O). The term "cerium oxide" includes but is not limited to $Ce_2O_3$ and $CeO_2$. The terms ceric oxide, ceria, cerium(III) oxide, cerium(IV) oxide and cerium dioxide are also encompassed by the term cerium oxide.

In a first aspect there is provided a coating for corrosion protection of metal objects, said coating comprising at least one cerium oxide and at least one polypeptide, wherein the polypeptide comprises 29 or less amino acid residues, wherein at least 15 % of the number of amino acid residues are DOPA.

One advantage of using the polypeptide comprising 29 or less amino acid residues are that the corrosion protection effect is achieved faster. By using short polypeptides, the corrosive protecting properties of the coating are obtained faster and without the necessity to wait for a long time before it becomes efficient. In one embodiment, the polypeptide comprises 28 or less amino acid residues.

In one embodiment. In one embodiment, the polypeptide comprises 27 or less amino acid residues. In one embodiment, the polypeptide comprises 26 or less amino acid residues. In one embodiment, the polypeptide comprises 25 or less amino acid residues. In one embodiment, the polypeptide comprises 24 or less amino acid residues. In one embodiment, the polypeptide comprises 23 or less amino acid residues. In one embodiment, the polypeptide comprises 20 or less amino acid residues. In one embodiment, the polypeptide comprises 19 or less amino acid residues. In one embodiment, the polypeptide comprises 18 or less amino acid residues. In one embodiment, the polypeptide comprises 17 or less amino acid residues. In one embodiment, the polypeptide comprises 16 or less amino acid residues. In one embodiment, the polypeptide comprises 15 or less amino acid residues. In one embodiment, the polypeptide comprises 14 or less amino acid residues. In one embodiment, the polypeptide comprises 13 or less amino acid residues. In one embodiment, the polypeptide comprises 12 or less amino acid residues. In one embodiment, the polypeptide comprises 11 or less amino acid residues. In one embodiment, the polypeptide comprises 10 or less amino acid residues. In one embodiment, the polypeptide comprises 9 or less amino acid residues. In one embodiment, the polypeptide comprises 8 or less amino acid residues. In one embodiment, the polypeptide comprises 7 or less amino acid residues.

The net charge of the polypeptide generally varies with the pH and is in one embodiment, positive at the application of the polypeptide. Suitable pH varies with the characteristics of the amino acid residues in the polypeptide.

In one embodiment, the at least one cerium oxide is $CeO_2$. In one embodiment, the at least one cerium oxide is in the form of particles with a diameter of less than 250 nm. In one embodiment, the at least one cerium oxide is in the form of particles with a diameter of less than 200 nm. In one embodiment, the at least one cerium oxide is in the form of particles with a diameter of less than 150 nm. In one embodiment, the at least one cerium oxide is in the form of particles with a diameter of less than 100 nm. In one embodiment, the at least one cerium oxide is in the form of particles with a diameter of less than 50 nm. In one embodiment, the at least one cerium oxide is in the form of particles with a diameter of less than 40 nm. In one embodiment, the at least one cerium oxide is in the form of particles with a diameter of less than 20 nm.

In one embodiment, at least one of the amino acid residues of the at least one polypeptide is lysine. In one embodiment, the at least one polypeptide comprises at least one lysine located next to a DOPA.

In one embodiment, the coating in addition comprises at least one second polypeptide comprising 30 or more amino acid residues. In one embodiment, the at least one second polypeptide comprises 30-3000 amino acid residues. In one embodiment, the at least one second polypeptide comprises 100-2000 amino acid residues. In one embodiment, the at least one second polypeptide comprises 200-1000 amino acid residues. The mixture of a short and a long polypeptide has the advantage of giving both a quick corrosion protection as well as a good long term corrosion protection. The short peptides in the mixture give a quick corrosion protection already a short time after the application. The longer peptides give an additional long term protection, although the effect from the longer peptides occur after some time. For many applications the combination of a short term quickly arising corrosion protection and a slower occurring long term protection is adequate. The polypeptide comprising 29 or less amino acid residues allows a corrosion resistance to be built up quickly, the longer second polypeptide complements the protection and improves the long term corrosion resistance.

In one embodiment, the coating comprises a phosphate.

In one embodiment, the coating comprises alternating layers of polypeptide and cerium oxide. In one embodiment, the coating comprises at least one layer comprising the at least one polypeptide, and the coating further comprises at least one other layer comprising the at least one cerium oxide. In one embodiment, the coating comprises a layer comprising both the at least one polypeptide and the at least one cerium oxide. It is an advantage of the invention that several layers can be made. In this way, it is possible to control the layer thickness. A thicker coating comprising several layers offers a more resistant coating. The multiple layer structure is in one embodiment, made by depositing polypeptide and cerium oxide in an alternating way. In an alternative embodiment the polypeptide and the cerium oxide is mixed before application to the surface whereby no structure with alternating layers is obtained.

In one embodiment, the coating is at least partially applied to a metal object. In one embodiment, the coating is at least partially applied to an object comprising at least one material selected from the group consisting of carbon steel, Fe-based alloy, zinc, an alloy comprising zinc, a magnesium alloy and an aluminum alloy.

In one embodiment, the coating comprises a molecule comprising at least one DOPA. Such a molecule comprising at least one DOPA is in addition to the polypeptide where at least 15 % of the number of amino acid residues are DOPA. The ratio between the molecule comprising at least one DOPA and the at least one polypeptide is in one embodiment 10:1-1:10. The ratio between the molecule comprising at least one DOPA and the at least one polypeptide is in one embodiment in the range 5:1-1:5. The ratio between the molecule comprising at least one DOPA and the at least one polypeptide is in one embodiment in the range 2:1-1:2. In one embodiment the ratio is 1:1. When the coating comprises a molecule comprising at least one DOPA the pH in the solution comprising the ingredients which are applied to the surface is preferably between 8-10. In one embodiment the pH is at least 8.5. In one embodiment the molecular weight ($M_w$) of the molecule comprising at least one DOPA is less than 1000. In another embodiment the molecular weight of the molecule comprising at least one DOPA is less than 2000.

In a second aspect there is provided a method for corrosion protection of metal objects, said method comprising applying a coating as described above.

In one embodiment an aqueous solution comprising the ingredients is applied onto the surface to be treated.

In one embodiment, the method further comprises the step of heating the coating to at least 60 °C during at least 10 minutes. The combination between the polymer and small particles comprising cerium oxide gives the excellent corrosion protection in particular after heating.

In one embodiment, the coating is at least partially applied to a metal object. In one embodiment, the coating is at least partially applied to an object comprising at least one material selected from the group consisting of carbon steel, a Fe-based alloy, a magnesium alloy, and an aluminum alloy.

In one embodiment, the metal object is coated by at least one method selected from the group consisting of: immersing, spraying, and roll coating. In one embodiment, the metal object is coated by immersing during a period of time ranging from 10 minutes to 2 hours. Also shorter and longer durations for dipping a metal object are possible.

In one embodiment, at least one buffer solution is used and wherein the buffer solution comprises at least one selected from the group consisting of citric acid, phosphoric acid, citrate ions, and phosphate ions, hydrogen phosphate ions, and dihydrogen phosphate ions.

In one embodiment, the concentration of the at least one polypeptide is 0.01-10 g/l and the concentration of the at least one cerium oxide is 0.1-10 g/l, calculated for a solution/suspension used for contacting with the metal object.

In one embodiment, the concentration of phosphate is 1-10 wt% calculated for a solution/suspension used for contacting with the metal object.

In one embodiment, the method comprises the steps of: a) applying at least one layer comprising the at least one cerium oxide, and b) applying at least one other layer comprising the at least one polypeptide. In one embodiment, a layer comprising the at least one cerium oxide, and a layer comprising the at least one polypeptide are applied sequentially several times. In one embodiment, the method comprises the step of applying a layer, said layer comprising both the at least one cerium oxide and the at least one polypeptide.

In one embodiment, the metal object is ground prior to contacting the metal object with the coating. This may further enhance the adhesion in particular for smooth surfaces.

Examples

Electrochemical impedance spectroscopy (EIS) of polypeptide/ceria nanocomposite film coated on a carbon steel surface exposed to 0.1 M NaCl solution at pH 6.5 was performed. The polypeptides tested were labelled as AT-M5D (SEQ ID No. 3), AT-M5D-4 (SEQ ID No. 2) and AT-M5D-8 (SEQ ID No. 1) and Mefp-1, where AT-M5D has a length of 37 amino acid residues, AT-M5D-4 (19 amino acid residues) is about a fourth of the length of AT-M5D and AT-M5D-8 (10 amino acids) is about an eighth of the length of AT-M5D. AT-M5D, AT-M5D-4 and AT-M5D-8 are synthetic polypeptides. Mefp-1 is about 800-1000 amino acid residues according to the literature. For a closer description of Mefp-1 and its sequence we refer to J. Herbert Waite in The Journal of Biological Chemistry Vol. 258, No. 5, pp 2911-2915, 1983 as well as J. Herbert Waite et al. in Biochemistry Vol. 24, No. 19, pp 5010-5014, 1985. The samples were deposited on a cold-rolled carbon steel surface in combination with ceria nanoparticles through alternative immersion processes. Four layers of AT-M5D/ceria, AT-M5D-4/ceria, AT-M5D-8/ceria or Mefp-1/ceria respectively were deposited on the different steel surfaces by first dipping the steel in the peptide solution for 40 minutes, then dipping in the ceria suspension, and repeating the process three more times.

1h after application, the AT-M5D-8 (10aa) provides the highest increase in the Rp values, as compared to the control sample, followed by the AT-M5D-4 (19aa), the full length AT-M5D (37aa) and the Mefp-1/ceria, in that order. The Rp value of the AT-M5D-8 (10aa) and AT-M5D-4 (19aa) 1 hour after application is higher than levels reached by the full length AT-M5D (37aa) within 1 hour to 7 days of application (Table 1, 2, 3) and higher than levels reached by the Mefp-1 within 1 hour to 2 days of application (Table 1, 2, 4).

1 day or more after application, the AT-M5D (37aa) and Mefp-1 generally provide a higher increase in Rp value, as compared to the control sample, than the AT-M5D-4 (19aa) and AT-M5D-8 (10aa) do at the corresponding times.

In order to evaluate the EIS data the following simple equivalent circuit was used to describe the steel-solution interface.

Rs: solution resistance between the reference electrode and working electrode, Rp: polarization resistance, CPE: constant phase element. The constant phase element (CPE) is used to instead of capacitance to account for the imperfect capacitive response of the interface. The impedance of the CPE is expressed by

$$Z_{CPE} = [Y_0(j\omega)^n]^{-1}$$

where $Y_0$ is the magnitude of CPE, j is the imaginary unit, and $\omega$ is the angular frequency. The exponential factor n is a fit parameter with less clear physical meaning. It is often related to the degree of surface roughness, a smaller deviation from 1, is a more homogeneous surface or surface film.

**Table 1.** Fitted results of EIS data of AT-M5D (37aa) (SEQ ID No. 3) samples. Rp is a measure of the corrosion resistance. The control samples were bare carbon steel.

| | $Y_0$/ F cm$^{-2}$ | n | Rp(AT-M5D (37aa))/ ohm*cm$^2$ | Rp(control)/ ohm*cm$^2$ |
|---|---|---|---|---|
| 1h | $(4.4\pm1.3)\times10^{-4}$ | 0.8 | $(1.6\pm0.3)\times10^3$ | $(1.3\pm0.1)\times10^3$ |
| 1d | $(1.2\pm0.4)\times10^{-3}$ | 0.7 | $(2.2\pm0.2)\times10^3$ | $(1.7\pm0.6)\times10^3$ |
| 2d | $(1.4\pm0.4)\times10^{-3}$ | 0.7 | $(2.4\pm0.1)\times10^3$ | - |
| 3d | $(1.4\pm0.3)\times10^{-3}$ | 0.7 | $(1.5\pm0.1)\times10^3$ | $(1.5\pm0.4)\times10^3$ |
| 4d | $(1.4\pm0.4)\times10^{-3}$ | 0.7 | $(2.5\pm0.3)\times10^3$ | - |
| 5d | $(1.4\pm0.4)\times10^{-3}$ | 0.7 | $(2.1\pm0.1)\times10^3$ | $(1.4\pm0.3)\times10^3$ |
| 6d | $(1.4\pm0.4)\times10^{-3}$ | 0.7 | $(1.6\pm0.1)\times10^3$ | - |
| 7d | $(1.4\pm0.4)\times10^{-3}$ | 0.7 | $(2.5\pm0.6)\times10^3$ | $(1.4\pm0.2)\times10^3$ |

**Table 2.** Fitted results of EIS data of AT-M5D-4 (19aa) (SEQ ID No.2) samples. Rp is a measure of the corrosion resistance. The control samples were bare carbon steel.

| Time | $Y_0$/ F cm$^{-2}$ | n | Rp (AT-M5D-4 (19aa)) /ohm*cm$^2$ | Rp (control) / ohm*cm$^2$ |
|---|---|---|---|---|
| 1h | $(5.4\pm2.4)\times10^{-4}$ | 0.8 | $(2.8\pm1.6)\times10^3$ | $(1.3\pm0.1)\times10^3$ |
| 2d | $(1.0\pm0.2\times10^{-3}$ | 0.8 | $(1.8\pm0.3)\times10^3$ | $(1.5\pm0.2)\times10^3$ |
| 4d | $(1.010.1)\times10^{-3}$ | 0.8 | $(1.6\pm0.1)\times10^3$ | $(1.5\pm0.4)\times10^3$ |
| 6d | $(1.1\pm0.2)\times10^{-3}$ | 0.8 | $(1.8\pm0.4)\times10^3$ | $(1.4\pm0.3)\times10^3$ |
| 8d | $(1.1\pm0.3)\times10^{-3}$ | 0.7 | $(2.0\pm0.3)\times10^3$ | $(1.410.2 )\times10^3$ |

**Table 3.** Fitted results of EIS data of AT-M5D-8 (10aa) (SEQ ID No. 1) samples. Rp is a measure of the corrosion resistance. The control samples were bare carbon steel.

| Time | $Y_0$/ F cm$^{-2}$ | n | Rp(AT-M5D-8 (10aa)) / ohm*cm$^2$ | Rp(control)/ ohm*cm$^2$ |
|---|---|---|---|---|
| 1h | $(5.412.4)\times10^{-4}$ | 0.7 | $(3.1\pm1.0)\times10^3$ | $(1.3\pm0.1)\times10^3$ |
| 2d | $(1.0\pm0.2)\times10^{-3}$ | 0.7 | $(1.3\pm0.2)\times10^3$ | $(1.5\pm0.2)\times10^3$ |
| 4d | $(1.0\pm0.1)\times10^{-3}$ | 0.7 | $(1.3\pm0.2)\times10^3$ | $(1.5\pm0.4)\times10^3$ |
| 6d | $(1.110.2)\times10^{-3}$ | 0.7 | $(1.3\pm0.3)\times10^3$ | $(1.4\pm0.3)\times10^3$ |
| 8d | $(1.110.3)\times10^{-3}$ | 0.6 | $(1.4\pm0.4)\times10^3$ | $(1.410.2)\times10^3$ |

**Table 4.** Fitted results of EIS data of Mefp-1 samples. Rp is a measure of the corrosion resistance. The control samples were bare carbon steel.

| Time | $Y_0$/ F cm$^{-2}$ | n | Rp (Mefp-1/ceria) / ohm*cm$^2$ |
|---|---|---|---|
| 1h | $(5.6\pm1.5)\times10^{-4}$ | 0.8 | $(1.0\pm0.2)\times10^3$ |
| 1d | $(9.3\pm3.2)\times10^{-3}$ | 0.8 | $(2.4\pm0.2)\times10^3$ |
| 2d | $(1.1\pm0.3)\times10^{-3}$ | 0.8 | $(2.4\pm0.2)\times10^3$ |
| 4d | $(1.1\pm0.2)\times10^{-3}$ | 0.8 | $(2.9\pm0.2)\times10^3$ |
| Time | $Y_0$/ F cm$^{-2}$ | n | Rp(control)/ ohm*cm$^2$ |
| 1h | $(5.5\pm1.1)\times10^{-4}$ | 0.8 | $(1.6\pm0.3)\times10^3$ |
| 1d | $(8.6\pm3.0)\times10^{-3}$ | 0.7 | $(1.7\pm0.4)\times10^3$ |
| 2d | $(1.1\pm0.3)\times10^{-3}$ | 0.7 | $(1.6\pm0.2)\times10^3$ |
| 4d | $(1.2\pm0.3)\times10^{-3}$ | 0.6 | $(1.6\pm0.1)\times10^3$ |

**Claims**

1. A coating for corrosion protection of metal objects, said coating comprising at least one cerium oxide and at least one polypeptide, wherein the polypeptide comprises 29 or less amino acid residues wherein at least 15 % of the number of amino acid residues are DOPA.

2. The coating according to claim 1, wherein the at least one cerium oxide is $CeO_2$.

3. The coating according to any one of claims 1-2, wherein the at least one cerium oxide is in the form of particles with a diameter of less than 250 nm.

4. The coating according to any one of claims 1-3, wherein at least one of the amino acid residues of the polypeptide is lysine.

5. The coating according to any one of claims 1-4, wherein the polypeptide comprises at least one lysine located next to a DOPA.

6. The coating according to any one of claims 1-5, wherein the coating in addition comprises at least one second polypeptide comprising 30 or more amino acid residues.

7. The coating according to any one of claims 1-6, wherein the coating comprises a phosphate.

8. The coating according to any one of claims 1-7, wherein the coating comprises at least one layer comprising the at least one polypeptide, and wherein the coating further comprises at least one other layer comprising the at least one cerium oxide.

9. The coating according to any one of claims 1-8, wherein the coating comprises a layer comprising both the at least one polypeptide and the at least one cerium oxide.

10. The coating according to any one of claims 1-9, wherein the coating is at least partially applied to a metal object.

11. The coating according to any one of claims 1-10, wherein the coating is at least partially applied to an object comprising at least one material selected from the group consisting of:

    a. carbon steel,
    b. a Fe-based alloy,
    c. zinc
    d. an alloy comprising zinc,
    e. a magnesium alloy, and
    f. an aluminum alloy.

12. The coating according to any of claims 1-11, wherein the coating comprises a molecule comprising at least one DOPA, the ratio between the molecule and the at least one polypeptide is in the range 10:1-1:10, the molecular weight ($M_w$) of the molecule being less than 2000.

13. A method for corrosion protection of metal objects, said method comprising applying a coating according to any of claim 1 to 12 to a metal object.

14. The method according to claim 13, further comprising the step of heating the coating to at least 60 °C during at least 10 minutes.

15. The method according to any one of claims 13-14, wherein at least one buffer solution is used and wherein the buffer solution comprises at least one selected from the group consisting of citric acid, phosphoric acid, citrate ions, and phosphate ions, hydrogen phosphate ions, and dihydrogen phosphate ions.

**Patentansprüche**

1. Beschichtung zum Korrosionsschutz von Metallgegenständen, wobei die Beschichtung mindestens ein Ceroxid und mindestens ein Polypeptid umfasst, wobei das Polypeptid 29 oder weniger Aminosäurereste umfasst, wobei mindestens 15% der Anzahl der Aminosäurereste DOPA sind.

2. Beschichtung nach Anspruch 1, wobei das mindestens eine Ceroxid $CeO_2$ ist.

3. Beschichtung nach einem der Ansprüche 1-2, wobei das mindestens eine Ceroxid in Form von Partikeln mit einem Durchmesser von weniger als 250 nm vorliegt.

4. Beschichtung nach einem der Ansprüche 1-3, wobei mindestens einer der Aminosäurereste des Polypeptids Lysin ist.

**5.** Beschichtung nach einem der Ansprüche 1-4, wobei das Polypeptid mindestens ein Lysin umfasst, das sich neben einem DOPA befindet.

**6.** Beschichtung nach einem der Ansprüche 1-5, wobei die Beschichtung zusätzlich mindestens ein zweites Polypeptid umfasst, das 30 oder mehr Aminosäurereste umfasst.

**7.** Beschichtung nach einem der Ansprüche 1-6, wobei die Beschichtung ein Phosphat umfasst.

**8.** Beschichtung nach einem der Ansprüche 1-7, wobei die Beschichtung mindestens eine Schicht umfasst, die das mindestens eine Polypeptid umfasst, und wobei die Beschichtung außerdem mindestens eine weitere Schicht umfasst, die das mindestens eine Ceroxid umfasst.

**9.** Beschichtung nach einem der Ansprüche 1-8, wobei die Beschichtung eine Schicht umfasst, die sowohl das mindestens eine Polypeptid als auch das mindestens eine Ceroxid umfasst.

**10.** Beschichtung nach einem der Ansprüche 1-9, wobei die Beschichtung zumindest teilweise auf einen Metallgegenstand aufgebracht ist.

**11.** Beschichtung nach einem der Ansprüche 1-10, wobei die Beschichtung zumindest teilweise auf einen Gegenstand aufgebracht ist, der mindestens ein Material, ausgewählt aus der Gruppe bestehend aus:

    a. Kohlenstoffstahl,
    b. einer Fe-basierten Legierung,
    c. Zink,
    d. einer Legierung, die Zink umfasst,
    e. einer Magnesiumlegierung und
    f. einer Aluminiumlegierung,
    umfasst.

**12.** Beschichtung nach einem der Ansprüche 1-11, wobei die Beschichtung ein Molekül umfasst, das mindestens ein DOPA umfasst, das Verhältnis zwischen dem Molekül und dem mindestens einen Polypeptid im Bereich 10:1-1:10 liegt, wobei das Molekulargewicht ($M_w$) des Moleküls weniger als 2000 beträgt.

**13.** Verfahren zum Korrosionsschutz von Metallgegenständen, wobei das Verfahren das Aufbringen einer Beschichtung nach einem der Ansprüche 1 bis 12 auf einen Metallgegenstand umfasst.

**14.** Verfahren nach Anspruch 13, das außerdem den Schritt des Erhitzens der Beschichtung auf mindestens 60°C während mindestens 10 Minuten umfasst.

**15.** Verfahren nach einem der Ansprüche 13-14, wobei mindestens eine Pufferlösung verwendet wird und wobei die Pufferlösung mindestens eines, ausgewählt aus der Gruppe bestehend aus Zitronensäure, Phosphorsäure, Citrationen und Phosphationen, Hydrogenphosphationen und Dihydrogenphosphationen, umfasst.

## Revendications

**1.** Revêtement pour la protection contre la corrosion d'objets métalliques, ledit revêtement comprenant au moins un oxyde de cérium et au moins un polypeptide, dans lequel le polypeptide comprend 29 résidus d'acides aminés ou moins, dans lequel au moins 15 % du nombre de résidus d'acides aminés sont une DOPA.

**2.** Revêtement selon la revendication 1, dans lequel l'au moins un oxyde de cérium est $CeO_2$.

**3.** Revêtement selon l'une quelconque des revendications 1 et 2, dans lequel l'au moins un oxyde de cérium se présente sous forme de particules avec un diamètre de moins de 250 nm.

**4.** Revêtement selon l'une quelconque des revendications 1 à 3, dans lequel au moins l'un des résidus d'acides aminés du polypeptide est la lysine.

**5.** Revêtement selon l'une quelconque des revendications 1 à 4, dans lequel le polypeptide comprend au moins une lysine située à côté d'une DOPA.

**6.** Revêtement selon l'une quelconque des revendications 1 à 5, dans lequel le revêtement comprend en outre au moins un deuxième polypeptide comprenant 30 résidus d'acides aminés ou plus.

**7.** Revêtement selon l'une quelconque des revendications 1 à 6, dans lequel le revêtement comprend un phosphate.

**8.** Revêtement selon l'une quelconque des revendications 1 à 7, dans lequel le revêtement comprend au moins une couche comprenant l'au moins un polypeptide, et dans lequel le revêtement comprend en outre au moins une autre couche comprenant l'au moins un oxyde de cérium.

**9.** Revêtement selon l'une quelconque des revendications 1 à 8, dans lequel le revêtement comprend une couche comprenant à la fois l'au moins un polypeptide et l'au moins un oxyde de cérium.

**10.** Revêtement selon l'une quelconque des revendications 1 à 9, dans lequel le revêtement est au moins partiellement appliqué sur un objet métallique.

**11.** Revêtement selon l'une quelconque des revendications 1 à 10, dans lequel le revêtement est au moins partiellement appliqué sur un objet comprenant au moins un matériau choisi dans le groupe consistant en :

   a. un acier au carbone,
   b. un alliage à base de Fe,
   c. du zinc
   d. un alliage comprenant du zinc,
   e. un alliage de magnésium, et
   f. un alliage d'aluminium.

**12.** Revêtement selon l'une quelconque des revendications 1 à 11, dans lequel le revêtement comprend une molécule comprenant au moins une DOPA, le rapport entre la molécule et l'au moins un polypeptide est dans la plage 10:1 à 1:10, le poids moléculaire ($M_w$) de la molécule étant inférieur à 2000.

**13.** Procédé de protection contre la corrosion d'objets métalliques, ledit procédé comprenant l'application d'un revêtement selon l'une quelconque des revendications 1 à 12 sur un objet métallique.

**14.** Procédé selon la revendication 13, comprenant en outre l'étape de chauffage du revêtement jusqu'à au moins 60 °C pendant au moins 10 minutes.

**15.** Procédé selon l'une quelconque des revendications 13 et 14, dans lequel au moins une solution tampon est utilisée et dans lequel la solution tampon comprend au moins un élément choisi dans le groupe consistant en l'acide citrique, l'acide phosphorique, les ions citrate, et les ions phosphate, les ions hydrogénophosphate, et les ions dihydrogénophosphate.

## REFERENCES CITED IN THE DESCRIPTION

**Patent documents cited in the description**

- US 20040028820 A
- WO 03008376 A
- CN 101658837
- WO 2012007199 A
- WO 2018132967 A

**Non-patent literature cited in the description**

- **ADHIKARI et al.** *Electrochimica Acta,* vol. 53 (12), 4239-4247
- **ZHITOMIRSKY.** *Surface Engineering,* vol. 20 (1), 43-47
- **Y. GAO et al.** *Transactions of the Institute of Metal Finishing,* 2006, vol. 84 (3), 141-148
- **N. CHANDRASEKARAN.** The influence of amino acid properties on the adsorption of proteins and peptides to stainless steel surfaces. *UC Research Repository,* 2014, 115-116
- **W. WEI et al.** *Langmuir,* 2015, vol. 31 (3), 1105-1112
- **D. C. HANSEN et al.** *Electrochimica Acta,* 2019, vol. 301, 411-420
- **B. KOLLBE AHN et al.** *Nature Communications,* 2015, vol. 6
- **A. BUTLER.** *Science,* 2015, vol. 349 (6248), 628-632
- **S. DAS et al.** *Advanced Functional Materials,* 2015, vol. 25 (36), 5840-5847
- **LEE et al.** *Science,* 2007, vol. 318, 426-430
- **J. HERBERT WAITE.** *The Journal of Biological Chemistry,* 1983, vol. 258 (5), 2911-2915
- **J. HERBERT WAITE et al.** *Biochemistry,* 1985, vol. 24 (19), 5010-5014